# EUROPÄISCHE PATENTANMELDUNG

(11) **EP 2 543 534 A1**
(43) Veröffentlichungstag der Anmeldung: **09.01.2013**
(21) Anmeldenummer: 11173272.3
(22) Anmeldetag: 08.07.2011
(51) Int. Cl.: B60L 3/00, B60L 11/18, B60K 1/04, B60W 50/02, H02J 7/00, H02H 7/18, H01M 2/34

(54) **Energiespeichervorrichtung mit erhöhter Sicherheit, Kraftfahrzeug mit einer derartigen Energiespeichervorrichtung und Verfahren zum Betreiben einer Energiespeichervorrichtung**

(71) Anmelder: SIEMENS AKTIENGESELLSCHAFT, 80333 München (DE)
(72) Erfinder: Eckardt, Dieter, 91074 Herzogenaurach (DE); Ruppert, Swen, 91096 Möhrendorf (DE); Götzendörfer, Bernd, 97453 Schonungen (DE); Weikert, Robert, 92342 Burggriesbach (DE)

(57) **Zusammenfassung**

Es soll eine Energiespeichervorrichtung bereitgestellt werden, von der im Falle eines Unfalls oder beim Service weniger Gefahr ausgeht. Daher wird eine Energiespeichervorrichtung für ein Kraftfahrzeug mit einem Gehäuse und mehreren Energiespeicherelementen (BB1, BB2, BB3, ..., BBn), die in Reihe geschaltet und in dem Gehäuse untergebracht sind, vorgeschlagen. Zwischen jeweils zwei der Energiespeicherelemente ist eine Schalteinrichtung (S1, S2, S3, ..., Sn) geschaltet. Eine Steuereinrichtung (4) ist an die Schalteinrichtung angeschlossen, mit der die Schalteinrichtung derart steuerbar ist, dass die zwei Energiespeicherelemente in einem ersten Zustand der Schalteinrichtung elektrisch miteinander verbunden und in einem zweiten Zustand elektrisch voneinander getrennt sind.

## Beschreibung

Die vorliegende Erfindung betrifft eine Energiespeichervorrichtung für ein Kraftfahrzeug mit einem Gehäuse und mehreren Energiespeicherelementen, die in Reihe geschaltet und in dem Gehäuse untergebracht sind. Darüber hinaus betrifft die vorliegende Erfindung ein Verfahren zum Betreiben einer Energiespeichervorrichtung für ein Kraftfahrzeug.

Elektrisch betriebene bzw. versorgte Kraftfahrzeuge besitzen in der Regel einen Hochvolt-Energiespeicher. Eine derartige Energiespeichervorrichtung liefert typischerweise eine Spannung von 400 V.

Elektro- oder Hybridfahrzeuge sind üblicherweise mit einer Hochvolt-Batterie als Energiespeichervorrichtung ausgestattet, an deren Polen die entsprechend hohe Spannung anliegt. Im Falle eines Unfalls kann nicht immer sichergestellt werden, dass keine für den Erstretter oder anderen Retter gefährliche Berührspannung zwischen der Karosserie und der Erde oder zwischen Karosserieteilen anliegt. Wünschenswert ist es außerdem, die generelle Gefahr, die von solchen Hochvoltbatterien mit erheblichem Energieinhalt ausgeht, zu begrenzen.

Es ist bekannt, in Elektrofahrzeugen die benötigte hohe Spannung für den Antrieb durch eine Reihenschaltung einzelner Zellen bzw. Energiespeicherelemente zu realisieren. Aber auch dann gefährdet unter Umständen die Gesamtspannung, die an freiliegenden Kabeln oder durch Beschädigungen auch an der Karosserie anliegen kann, Fahrer, Beifahrer und Rettungskräfte.

Ein Hochvolt-Energiespeicher kann aber auch als Hochleistungskondensator realisiert sein. Dieser muss zu Service- oder Transportzwecken an den Klemmen (ggf. auch an den Klemmen seiner Module) in der Spannung so reduziert werden, dass zum einen das Servicepersonal die Klemmen zwischen Pluspol und Minuspol berühren darf (Kleinspannung; englisch: extra low voltage), und zum anderen ein Kurzschluss zwischen den Klemmen nicht zu gefährlichen Situationen (Brand, Explosion) führen kann.

Eine gängige Methode ist es, den Energiespeicher soweit zu entladen, dass die Klemmenspannung unkritisch ist. Insbesondere sinkt bei der Entladung eines Hochvolt-Kondensators die Spannung nahezu bis null. Meist werden mehrere Module mit unterschiedlicher Entladecharakteristik (z.B. bei unterschiedlichen Kapazitäten oder Vorgeschichten/Alterung) zu einem System in Serie hintereinander geschaltet. Nach dem Entladen bestimmt z. B. die niedrigste Modulspannung (z.B. bei Spannung null, um Aufladung in entgegengesetzter Richtung zu vermeiden) die Schlussspannung der Systementladung. Die Entlade-Restspannung der einzelnen Module nach einer Systementladung können sehr unterschiedlich sein, sodass bestimmte Module eine beträchtliche Restspannung aufweisen können, während andere spannungslos sind. Die Restspannung jedes einzelnen Moduls muss anschließend in einem separaten Vorgang z.B. manuell durch externe Entladewiderstände abgebaut werden. Dabei kann es vorkommen, dass manche Zellen in negativer Richtung aufgeladen (Umladung) werden. Die Module müssen am Schluss kurzgeschlossen werden, um eine Wideraufladung in der Folgezeit zu verhindern.

Die Aufgabe der vorliegenden Erfindung besteht somit darin, eine Energiespeichervorrichtung für ein Kraftfahrzeug bereitzustellen, die eine verbesserte Sicherheit für betroffene Personen bietet.

Erfindungsgemäß wird diese Aufgabe gelöst durch eine Energiespeichervorrichtung für ein Kraftfahrzeug mit
- einem Gehäuse und
- mehreren Energiespeicherelementen, die in Reihe geschaltet und in dem Gehäuse untergebracht sind, wobei
- zwischen jeweils zwei der Energiespeicherelemente eine Schalteinrichtung geschaltet ist, und
- eine Steuereinrichtung an die Schalteinrichtung angeschlossen ist, mit der die Schalteinrichtung derart steuerbar ist, dass die zwei Energiespeicherelemente in einem ersten Zustand elektrisch miteinander verbunden und in einem zweiten Zustand elektrisch voneinander getrennt sind.

Darüber hinaus wird erfindungsgemäß bereitgestellt ein Verfahren zum Betreiben einer Energiespeichervorrichtung für ein Kraftfahrzeug, die mehrere in Reihe geschaltete Energiespeicherelemente aufweist, welche in einem Gehäuse untergebracht sind, durch
- Bereitstellen einer Schalteinrichtung zwischen jeweils zwei der Energiespeicherelemente in dem Gehäuse und
- Steuern der Schalteinrichtung derart, dass die zwei Energiespeicherelemente in einem ersten Zustand elektrisch miteinander verbunden und in einem zweiten Zustand elektrisch voneinander getrennt sind.

In vorteilhafter Weise ist also jeweils zwischen zwei Energiespeicherelementen eine Schalteinrichtung vorgesehen, mit der auf Veranlassung der Steuereinrichtung die Energiespeicherelemente bei Bedarf voneinander getrennt werden können. Damit liegt an etwaigen Kontakten allenfalls noch die Spannung eines einzelnen Energiespeicherelements an. Dies reduziert deutlich die Gefährdung von Personen im oder am Fahrzeug.

Vorzugsweise ist an die Steuereinrichtung eine Sensoreinrichtung angeschlossen, deren Signal die Steuereinrichtung zum Steuern der Schalteinrichtung verwendet. Insbesondere kann eine derartige Sensoreinrichtung einen Beschleunigungssensor und/oder einen Lagesensor aufweisen. Damit können vor allem so genannte "Crashsignale" die im Fahrzeug bei einem Auffahrunfall generiert werden, von der Steuereinrichtung zum Abschalten der Schalteinrichtung genutzt werden.

Die Energiespeichervorrichtung kann eine Gesamtspannung von mehr als 100 V liefern, wobei jedes der Energiespeicherelemente maximal 42 V liefert. Es sind dann mehr als drei derartige Energiespeicherelemente notwendig, um die gewünschte Gesamtspannung bereitzustellen. Typischerweise besitzt eine Hochvolt-Batterie eines Kraftfahrzeugs etwa 400 V, sodass etwa zehn derartige Energiespeicherelemente notwendig sind, um die Gesamtspannung aufzubauen. Durch die Schalteinrichtungen zwischen den Energiespeicherelementen können diese voneinander getrennt werden, sodass eben nicht mehr die 400 V an den Polen der Batterie anliegen, sondern allenfalls 42 V an freiliegenden Kontakten oder Kabeln.

In einer Ausführungsform kann die Schalteinrichtung einen Sprengbolzen aufweisen, der in dem ersten Zustand der Schalteinrichtung die beiden Energiespeicherelemente miteinander elektrisch verbindet und in dem zweiten Zustand gesprengt ist, sodass die beiden Energiespeicherelemente voneinander getrennt sind. Mit einem Sprengbolzen lassen sich zwei Energiespeicherelemente zuverlässig voneinander trennen. Allerdings ist diese Trennung irreversibel.

Gemäß einer alternativen Ausführungsform weist die Schalteinrichtung ein elektromagnetisch betätigbares Element auf, welches durch eine mechanische Feder in eine Abschaltstellung bewegt wird. Ein solches elektromagnetisch betätigbares Element lässt sich dann beispielsweise mit Hilfe eines Spezialwerkzeugs bei Bedarf in den ersten Zustand (Einschaltstellung) bewegen.

Auf Veranlassung der Steuereinrichtung kann ein von der Energiespeichervorrichtung versorgter Verbraucher von dieser getrennt werden, bevor die Schalteinrichtung in den zweiten Zustand geschaltet wird. Dies hat den Vorteil, dass ein in der Schalteinrichtung ggf. auftretender Lichtbogen verhindert wird, da bereits vor dem Trennen kein Strom mehr zu dem Verbraucher fließt.

In einem Ausführungsbeispiel sind die Energiespeicherelemente Kondensatoren oder Gruppen von Kondensatoren. Die Energiespeicherelemente können aber auch Batterieblöcke sein, die zu der Energiespeichervorrichtung zusammengeschaltet sind.

Gemäß einer Weiterbildung der erfindungsgemäßen Energiespeichervorrichtung wird bei Unterschreiten einer vorgegebenen Minimalspannung an einem der Energiespeicherelemente die Schalteinrichtung von der Steuereinrichtung automatisch in den zweiten Zustand versetzt. Die Energiespeicherelemente werden also bei einer eigenen Minimalspannung voneinander getrennt.

Darüber hinaus kann bei Unterschreiten einer vorgegebenen Mindestversorgungsspannung an der Schalteinrichtung diese von der Steuereinrichtung automatisch in den zweiten Zustand versetzt werden. Dadurch kann gewährleistet werden, dass die Schalteinrichtung stets zuverlässig funktioniert.

Des Weiteren kann vorgesehen sein, dass die Schalteinrichtung erst nach einer vorbestimmten Verzögerungszeit nach dem jeweiligen Ereignis von der Steuereinrichtung automatisch in den zweiten Zustand versetzt wird. Damit können evtl. hohe fliesende Ströme in ausreichender Weise abklingen.

Die Steuereinrichtung kann außerdem einen Servicehebel aufweisen, mit dem die Schalteinrichtung zum Trennen der Energiespeicherelemente mechanisch gekoppelt ist. Damit kann Servicepersonal mit einem einzigen Handgriff einen Servicezustand herstellen, bei dem Gefährdungen am Fahrzeug vermindert oder ausgeschlossen sind. Insbesondere ist es dabei günstig, wenn mehrere Schalteinrichtungen mit dem Servicehebel gekoppelt sind, sodass sich mit dem Umlegen des Servicehebels eben entsprechend mehrere Energiespeicherelemente voneinander trennen lassen.

Es ist oben bereits angedeutet worden, dass besonders vorteilhaft ein Kraftfahrzeug mit einem elektrischen Antriebsmotor mit der geschilderten Energiespeichervorrichtung ausgestattet werden kann. Für den Betrieb des Kraftfahrzeugs bzw. der Energiespeichervorrichtung ist es dann von Vorteil, wenn beispielsweise zum Steuern der Schalteinrichtung(en) ein Steuersignal von einem Rückhaltesystem des Kraftfahrzeugs genutzt wird. Es kann damit eine im Kraftfahrzeug bereits verbaute Sensorik zum Trennen der Energiespeicherelemente voneinander eingesetzt werden.

Die vorliegende Erfindung wird nun anhand der beigefügten Zeichnungen näher erläutert, in denen zeigen:
- FIG 1: ein Blockschaltbild einer Energiespeichervorrich-tung gemäß einem ersten Ausführungsbeispiel und
- FIG 2: ein Blockschaltbild einer Energiespeichervorrich-tung gemäß einem zweiten Ausführungsbeispiel.

Die nachfolgend näher geschilderten Ausführungsbeispiele stellen bevorzugte Ausführungsformen der vorliegenden Erfindung dar.

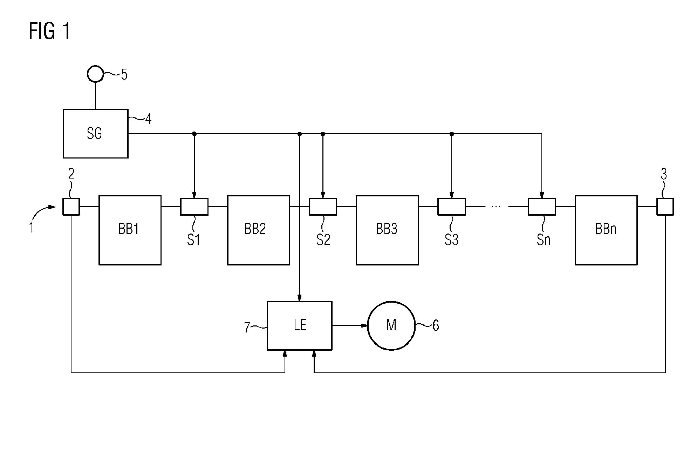

Gemäß dem Beispiel von FIG 1 weist eine Energiespeichervorrichtung 1 mehrere Batterieblöcke BB1, BB2, BB3, ..., BBn als Energiespeicherelemente auf. Zwischen jeweils zwei Batterieblöcken befindet sich eine Schalteinrichtung S1, S2, S3, ..., Sn. Über die Schalteinrichtungen S1 bis Sn sind sämtliche Batterieblöcke BB1 bis BBn im Normalbetrieb in Serie geschaltet. In diesem Normalbetrieb befinden sich die Schalteinrichtungen S1 bis Sn in einem ersten Zustand, in dem sie leiten. Somit addieren sich im Normalbetrieb die Einzelspannungen der Batterieblöcke BB1 bis BBn zu einer Gesamtspannung.

Die Energiespeichervorrichtung weist außerdem zwei Kontakte 2, 3 auf, die den Anfangspunkt und den Endpunkt der Reihenschaltung der Batterieblöcke BB1 bis BBn und der Schalteinrichtungen S1 bis Sn darstellen. An den Kontakten 2, 3 liegt also die Gesamtspannung der Energiespeichervorrichtung 1 an.

Darüber hinaus besitzt die Energiespeichervorrichtung 1 ein Steuergerät 4. Das Steuergerät 4 ist mit sämtlichen Schalteinrichtungen S1 bis Sn verbunden, um diese in geeigneter Weise anzusteuern. Insbesondere sollen die Schalteinrichtungen S1 bis Sn von dem Steuergerät 4 von dem ersten Zustand, in dem sie leitend sind, in einen zweiten Zustand, in dem sie nicht leitend sind, bei Bedarf geschaltet werden. Entsprechender Bedarf liegt beispielsweise im Servicefall oder bei einem Unfall vor. In dem zweiten Zustand sind also benachbarte Batterieblöcke nicht mehr elektrisch miteinander verbunden, und die Reihenschaltung ist aufgehoben. In diesem zweiten Zustand der Schalteinrichtungen S1 bis Sn liegt an den Kontakten 2 und 3 der Energiespeichervorrichtung keine Spannung mehr an. Eine Gefährdung von Personen durch die Kontakte 2, 3 oder daran angeschlossene Leitungen ist damit nicht mehr gegeben.

An das Steuergerät 4 ist ein Sensor 5 angeschlossen. Dieser liefert ein Signal über den Zustand oder die Umgebung des Fahrzeugs, in dem die Energiespeichervorrichtung 1 verbaut ist. Beispielsweise handelt es sich dabei um einen Sensor oder ein Sensorsystem, das einen Unfall (mechanischer Stoß/ Schlag) detektiert. Insbesondere kann hier als Sensor 5 auch ein Detektorsystem verwendet werden, das im Kraftfahrzeug zur Auslösung eines Airbags oder eines anderen Rückhaltesystems verwendet wird. Der Sensor 5 kann aber auch stellvertretend für das Ausgangssignal eines Fahrerassistenzsystems stehen, welches beispielsweise bereits vor einem Zusammenstoß eine Notbremsung veranlasst.

Ein elektrischer Antriebsmotor 6 wird über eine Leistungselektronik 7 von den Kontakten 2, 3 der Energiespeichervorrichtung 1 gespeist. Die Leistungselektronik 7 wird ebenfall von dem Steuergerät bzw. der Steuereinrichtung 4 gesteuert. Beispielsweise kann die Steuereinrichtung 4 die Leistungselektronik 7 zu einer Notabschaltung des Motors 6 veranlassen.

Im Folgenden werden nun konkrete Details des Ausführungsbeispiels beschrieben. Insbesondere kann zur Gewährleistung der elektrischen Sicherheit auch im Falle eines Unfalls der Batterieblock in eine Anzahl von kleineren Blöcken BB1 bis BBn aufgeteilt sein, von denen jeder maximal eine Spannung von 42 V aufweist. Eine derartige Maximalspannung stellt für den menschlichen Körper kaum eine Gefährdung dar.

Der Sensor 5 kann beispielsweise ein Beschleunigungssensor sein, wie er typischerweise für die Auslösung von Airbags benutzt wird. Der Sensor 5 kann aber auch dafür ausgebildet sein, die Lage des Kraftfahrzeugs zu erfassen, sodass beispielsweise bei einem Überrollen des Fahrzeugs ein Steuerbefehl für die Trennung der Batterieblöcke ausgelöst wird.

Die Schalteinrichtungen S1 bis Sn sind elektrisch steuerbare Verbindungselemente. Ein derartiges Verbindungselement kann ein Sprengbolzen sein, dessen Ladung bei einem Unfall oder einer sonstigen Gefährdung gezündet wird. Die Verbindungselemente können auch durch Gasdruck aufgetrennt werden. Der Nachteil davon ist, dass die Verbindung zwischen den einzelnen Batterieblöcken nicht mehr hergestellt werden kann, und die Batterie komplett erneuert werden muss. Es sind jedoch auch elektromagnetisch betätigbare Elemente als Schalteinrichtungen denkbar, die im Normalbetrieb mechanisch arretiert und mit Federkraft vorgespannt sind. Im Auslösefall verschiebt die Feder das Element derart, dass die elektrische Verbindung unterbrochen und damit die Schalteinrichtung abgeschaltet ist (zweiter Zustand). Solche Elemente lassen sich so konstruieren, dass sie mit einem Spezialwerkzeug wieder geschlossen werden können. Von dem jeweiligen Auslösemechanismus unabhängig ist jedoch die konkrete Ableitung des Auslösebefehls von der Steuereinrichtung 4.

In jedem Fall sollte jedoch beim Trennen der Energiespeicherelemente ein Lichtbogen vermieden oder ein entstandener Lichtbogen gelöscht werden. Zu diesem Zweck ist es vorteilhaft, wenn die Last bzw. der Verbraucher, hier der Antriebsmotor 6 einschließlich Leistungselektronik 7 zuerst abgeschaltet wird. Insbesondere können hierzu alle Leistungstransistoren (z.B. eines Umrichters der Leistungselektronik 7) gesperrt werden, sodass die Batterie nahezu stromlos wird. Erst wenige Millisekunden danach werden dann die elektrischen Verbindungen zwischen den Batterieblöcken BB1 bis BBn gelöst.

Vorteilhafterweise besteht bei elektromagnetisch betätigbaren Verbindungselementen (Schalteinrichtungen) prinzipiell die Möglichkeit, einzelne Batterieblöcke bzw. Energiespeicherelemente austauschen zu können (z.B. im Fehlerfall). Die Aufteilung in einzelne Blöcke mit kleinerem Energieinhalt erhöht zudem die generelle Betriebssicherheit, da Batteriekurzschlüsse solcher Blöcke durch den geringeren Energieinhalt auch potentiell einen geringeren Schaden mit sich bringen. Die geringere Spannung eines solchen Blocks führt ferner zu geringeren Kurzschlussströmen, da schon geringfügige Verschmutzung sich signifikant auf die Stromstärke auswirken kann, wohingegen bei größeren Spannungen dieser Effekt meist weniger stark ausgeprägt ist, da die Schmutzschicht durchschlagen wird.

Durch das Trennen der Energiespeicherelemente können insbesondere auch die Entstehung von Funken und Bränden vermieden werden.

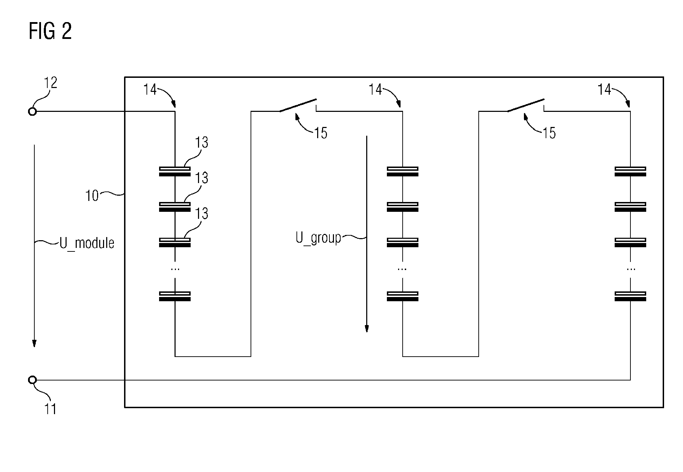

Ein weiteres Ausführungsbeispiel einer erfindungsgemäßen Energiespeichervorrichtung ist in FIG 2 wiedergegeben. Die Energiespeichervorrichtung ist hier als Modul mit einem Gehäuse 10 realisiert. Das Modul weist Anschlusskontakte 11, 12 auf, zwischen denen sich eine Spannung U_module ergibt.

Das Modul besteht hier aus mehreren in Serie geschalteten Zellen 13 (Leistungskondensatoren oder Batterieblöcke), die in gleichgroße Gruppen 14 so angeordnet werden können, dass die Maximalspannung U_group zu jeder Zeit unter der maximalen Kleinspannung liegt.

Zwischen den Gruppen 14 sind ein oder mehrere Trennschalter 15 (Schalteinrichtungen) derart angebracht, dass zu Servicezwecken ein Auftrennen der Reihenschaltung der Zellgruppen 14 realisiert werden kann. Die nach außen hin zugänglichen Modulklemmen 11, 12 (Pluspol und Minuspol) sind damit im geöffneten Zustand (zweiter Zustand) spannungsfrei (U_module = 0), und die maximal auftretende Spannung innerhalb des Moduls ist die maximale Gruppenspannung (U_group < maximale Kleinspannung), die im Bereich der Kleinspannung liegt.

Die Trennschalter 15 bzw. Schalteinrichtungen können mithilfe einer Steuereinrichtung (In FIG 2 nicht dargestellt) an die Modulspannung U_module derart gekoppelt werden, dass bei Unterschreiten einer bestimmten Minimalspannung die Trennschalter 15 automatisch aufgehen. Darüber hinaus können die Trennschalter auch so gesteuert werden, dass sie bei Abfall der Spannungsversorgung der Steuereinrichtung (Modulelektronik) automatisch aufgehen. Dabei ist es empfehlenswert, eine Verzögerungszeit vorzusehen, damit im nicht-stromlosen Zustand ein Abfall der Spannungsversorgung nicht zur Beschädigung der Trennschalter 15 führt.

Optional können die Trennschalter 15 auch mechanisch an einen Servicehebel (in FIG 2 nicht dargestellt) gekoppelt sein, der vom Servicepersonal betätigt wird. Somit kann eine Auftrennung der Reihenschaltung der Energiespeicherelemente durch Betätigen eines einzigen Hebels, nämlich des Servicehebels, ein gefahrenloser Zustand der Energiespeichervorrichtung hergestellt werden.

Eine Modul-Restentladung ist somit nicht notwendig und eine ungefährliche Berührungsspannung ist ohne wesentliche Verzögerung gewährleistet. D.h. zu Servicezwecken beispielsweise ist das Energiespeichermodul auch im vollgeladenen Zustand berührbar.

## Patentansprüche

1. Energiespeichervorrichtung für ein Kraftfahrzeug mit
- einem Gehäuse (10) und
- mehreren Energiespeicherelementen (BB1, ..., BBn; 14), die in Reihe geschaltet und in dem Gehäuse untergebracht sind,
**dadurch gekennzeichnet, dass**
- zwischen jeweils zwei der Energiespeicherelemente eine Schalteinrichtung (S1, ..., Sn; 15) geschaltet ist, und
- eine Steuereinrichtung (4) an die Schalteinrichtung angeschlossen ist, mit der die Schalteinrichtung derart steuerbar ist, dass die zwei Energiespeicherelemente in einem ersten Zustand der Schalteinrichtung elektrisch miteinander verbunden und in einem zweiten Zustand elektrisch voneinander getrennt sind.

2. Energiespeichervorrichtung nach Anspruch 1, wobei an die Steuereinrichtung (4) eine Sensoreinrichtung (5) angeschlossen ist, deren Signal die Steuereinrichtung zum Steuern der Schalteinrichtung (S1, ..., Sn; 15) verwendet.

3. Energiespeichervorrichtung nach Anspruch 2, wobei die Sensoreinrichtung einen Beschleunigungssensor und/oder einen Lagesensor aufweist.

4. Energiespeichervorrichtung nach einem der vorhergehenden Ansprüche, die eine Gesamtspannung von mehr als 100 V liefert, wobei jedes der Energiespeicherelemente (BB1, ..., BBn; 14) maximal 42 V liefert.

5. Energiespeichervorrichtung nach einem der vorhergehenden Ansprüche, wobei die Schalteinrichtung (S1, ..., Sn; 15) einen Sprengbolzen aufweist, der in dem ersten Zustand der Schalteinrichtung die beiden Energiespeicherelemente (BB1, ..., BBn; 14) miteinander elektrisch verbindet und in dem zweiten Zustand gesprengt ist, sodass die beiden Energiespeicherelemente voneinander getrennt sind.

6. Energiespeichervorrichtung nach einem der vorhergehenden Ansprüche, wobei die Schalteinrichtung (S1, ..., Sn; 15) ein elektromechanisch betätigbares Element aufweist, welches durch eine mechanische Feder in eine Abschaltstellung bewegt wird.

7. Energiespeichervorrichtung nach einem der vorhergehenden Ansprüche, wobei veranlasst durch die Steuereinrichtung (4) ein von der Energiespeichervorrichtung versorgter Verbraucher von dieser trennbar ist, bevor die Schalteinrichtung in den zweiten Zustand geschaltet wird.

8. Energiespeichervorrichtung nach einem der vorhergehenden Ansprüche, wobei die Energiespeicherelemente (BB1, ..., BBn; 14) Kondensatoren (13) oder Gruppen von Kondensatoren (14) sind.

9. Energiespeichervorrichtung nach einem der vorhergehenden Ansprüche, wobei bei Unterschreiten einer vorgegebenen Minimalspannung an einem der Energiespeicherelemente (BB1, ..., BBn; 14) die Schalteinrichtung (S1, ..., Sn; 15) von der Steuereinrichtung (4) automatisch in den zweiten Zustand versetzt wird.

10. Energiespeichervorrichtung nach einem der vorhergehenden Ansprüche, wobei bei Unterschreiten einer vorgegebenen Mindestversorgungsspannung an der Schalteinrichtung (S1, ..., Sn; 15) diese von der Steuereinrichtung (4) automatisch in den zweiten Zustand versetzt wird.

11. Energiespeichervorrichtung nach Anspruch 9 oder 10, wobei die Schalteinrichtung (S1, ..., Sn; 15) erst nach einer vorbestimmten Verzögerungszeit nach dem jeweiligen Ereignis von der Steuereinrichtung automatisch in den zweiten Zustand versetzt wird.

12. Energiespeichervorrichtung nach einem der vorhergehenden Ansprüche, wobei die Steuereinrichtung (4) einen Servicehebel aufweist, mit dem die Schalteinrichtung (S1, ..., Sn; 15) zum Trennen der Energiespeicherelemente mechanisch gekoppelt ist.

13. Kraftfahrzeug mit einem elektrischen Antriebsmotor (6) und einer Energiespeichervorrichtung nach einem der vorhergehenden Ansprüche zur Versorgung des elektrischen Antriebsmotors.

14. Verfahren zum Betreiben einer Energiespeichervorrichtung für ein Kraftfahrzeug, die mehrere in Reihe geschaltete Energiespeicherelemente (BB1, ..., BBn; 14) aufweist, welche in einem Gehäuse (10) untergebracht sind,
**gekennzeichnet durch**
- Bereitstellen einer Schalteinrichtung (S1, ..., Sn; 15) zwischen jeweils zwei der Energiespeicherelemente in dem Gehäuse und
- Steuern der Schalteinrichtung derart, dass die zwei Energiespeicherelemente in einem ersten Zustand der Schalteinrichtung elektrisch miteinander verbunden und in einem zweiten Zustand elektrisch voneinander getrennt sind.

15. Verfahren nach Anspruch 14, wobei zum Steuern der Schalteinrichtung (S1, ..., Sn; 15) ein Steuersignal von einem Rückhaltesystem des Kraftfahrzeugs genutzt wird.
